# EUROPEAN PATENT APPLICATION

(11) **EP 1 489 892 A1**
(43) Date of publication of application: **22.12.2004**
(21) Application number: 03703237.2
(22) Date of filing: 06.02.2003
(51) Int. Cl.: H05B 33/14, H05B 33/20, C09K 11/67, C09K 11/00

(54) **ELECTROLUMINESCENCE DEVICE**

(30) Priority: 13.02.2002 JP 2002034856
(71) Applicant: Uezawa, Toshikazu, Takarazuka-shi, Hyogo 665-0842 (JP); Tseng, Peter, N. Area, 404 Taichung (TW)
(72) Inventor: Uezawa, Toshikazu, Takarazuka-shi, Hyogo 665-0842 (JP); Tseng, Peter, N. Area, 404 Taichung (TW)
(74) Representative: Leson, Thomas Johannes Alois, Dipl.-Ing.
(86) International application number: PCT/JP2003/001274
(87) International publication number: WO 2004/002199

(57) **Abstract**

On a back electrode 1, a sealing polymer layer 3 of low water-permeability serving as an insulating layer, a plurality of dielectric cells 9 containing fluorescent particles 7 embedded in a binding material 5 of low-leakage-current high dielectric constant, a binding material layer 11, and a transparent conductive layer 13 made of ITO are built up in a multilayer structure and a transparent protecting film 15 made of a PET film is lastly formed on the transparent conductive layer 13. A luminous layer is composed of the dielectric cells 9. The fluorescent particles 7 contained in the luminous layer are made of Zinc, Sulfur, Manganese, Copper, Silicon, and Titanium. The mass ratio of Zinc is 1, that of Sulfur 3.1, that of Manganese 0.3, that of Copper 0.7, that of Silicon 3.5, and that of Titanium 5.6, and the sum of these numeric values is 14.2.

## Description

### Technical Field

The present invention relates to an electroluminescent element emitting white light.

### Background Art

As an electroluminescent element (hereinafter referred to as an EL element) which emits light when an electric voltage is applied thereto, so far, an EL element laminated with a transparent conductive layer, a luminous layer including fluorescent particles, an insulating layer, and a back electrode is known.

The color of light emitted from the EL element is determined by a fluorescent material contained in a luminous layer. Not only three primary colors of red, blue and green, but various colors of light are realized by selecting the fluorescent material used, and an EL element emitting white light is also provided.

However, the conventional EL element emitting white light cannot emit pure white light. In most cases, the tone of the white light is reddish or bluish. Due to these drawbacks, the conventional EL element emitting white light has a problem that it is inadequate to use in a display panel.

The present invention has been achieved in light of the problem mentioned above, and aims at providing an EL element which can emit pure white light.

### Disclosure of the Invention

For achieving the above-mentioned object, according to the present invention, an EL element laminated with a transparent conductive layer, a luminous layer including a plurality of fluorescent particles, an insulating layer, and a back electrode, is characterized in that the plurality of fluorescent particles comprise Zinc, Sulfur, Manganese, Copper, Silicon, and Titanium, in which the mass ratio of Zinc is 1, that of Sulfur 3.1, that of Manganese 0.1-0.9, that of Copper 0.9-0.1, that of Silicon 3.5, and that of Titanium 5.6, and the sum of these numeric values is 14.2.

Such an arrangement provides the EL element with a luminous layer comprising Zinc, Sulfur, Manganese, Copper, Silicon, and Titanium as the fluorescent particles, in which the mass ratio of Zinc is 1, that of Sulfur 3.1, that of Manganese 0.1-0.9, that of Copper 0.9-0.1, that of Silicon 3.5, and that of Titanium 5.6, and the sum of these numeric values is 14.2. Therefore, an EL element which emits pure white light is produced.

In this arrangement, the greater the mass ratio of Manganese is, the more bluish the color of white light emitted from the EL element becomes. And the greater the mass ratio of Copper is, the more reddish the color of white light emitted from the EL element becomes. Especially, when the mass ratio of Zinc is 1, that of Sulfur 3.1, that of Manganese 0.3, that of Copper 0.7, that of Silicon 3.5, and that of Titanium 5.6, the color of emitted light becomes pure white.

Further, according to the present invention, the luminous layer comprises a plurality of dielectric cells which are arranged between the transparent conductive layer and the back electrode, and which fully encapsulate at least one of the plurality of fluorescent particles. In this arrangement, it is preferable that each of the plurality of dielectric cells is substantially separated from adjacent cells.

Even when cutting, stamping, punching and other processes are worked upon the EL element, such an arrangement permits only a small number of dielectric cells located in the worked section to be damaged by moisture, and most of the dielectric cells to be left undamaged. Therefore, an EL element emitting white light with excellent workability and without loss of life is provided.

### Brief Description of the Drawings

Fig.1 is a sectional view showing an embodiment of the present invention; and
Fig.2 is a sectional view showing a variant of the embodiment shown in Fig. 1.

### Best Modes for Carrying Out the Invention

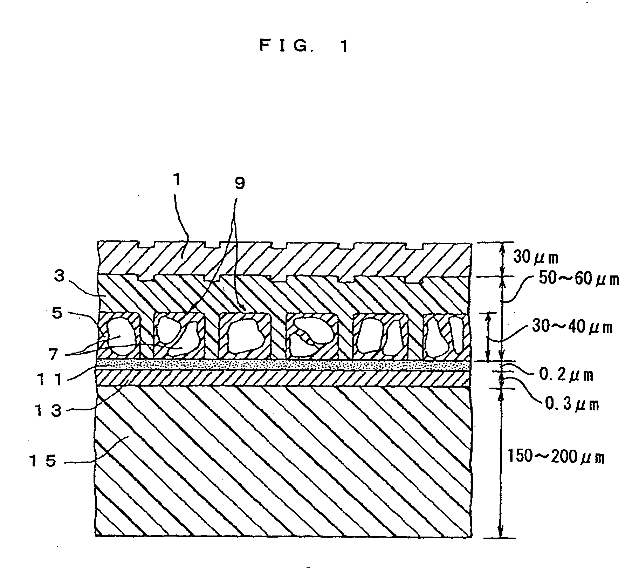

Now referring to Fig. 1, an embodiment of the present invention will be described. Fig.1 is a sectional view of the embodiment, and shows an example formed by the printing method.

As shown in Fig. 1, an EL element described in this embodiment comprises a back electrode 1 made of aluminum. On the back electrode 1, a sealing polymer layer 3 of low water-permeability serving as an insulating layer, a plurality of dielectric cells 9 containing fluorescent particles 7 embedded in a binding material 5 of low-leakage-current high dielectric constant, a binding material layer 11, and a transparent conductive layer 13 made of indium tin oxide (ITO) are built up sequentially in a multilayer structure. Here, each of the dielectric cells 9 is separated from each other by the sealing polymer layer 3 which gets into the gaps between the adjacent dielectric cells 9.

Further, a transparent protecting film 15 made of a polyethylene terephthalate (PET) film is lastly formed on the transparent conductive layer 13. Here, the material of the transparent protecting film 15 is not limited to PET, but other plastic films can also be used.

By the way, the above is described in the case that the EL element is formed starting from the back electrode 1 in a multilayer structure, however, the layers can also be built up reversibly from the transparent protecting film 15.

Meantime, a luminous layer is composed of the dielectric cells 9 embedded in the binding material 5. As a material of the fluorescent particles 7 of this luminous layer, Zinc, Sulfur, Manganese, Copper, Silicon, and Titanium are contained. The mass ratio of Zinc is 1, that of Sulfur 3.1, that of Manganese 0.3, that of Copper 0.7, that of Silicon 3.5, and that of Titanium 5.6, and the sum of these numeric values is 14.2. By containing the materials with the mass ratio described above, the EL element emits approximately pure white light, neither reddish nor bluish. More specifically, under the conditions that the tolerant maximum value is set at 200V in the effective value in alternating volts and at 1 kHz in frequency, the EL element of the luminous efficacy being 0.2 mA/cm² (at 100 Vrms, 400 Hz), the luminance being 120 cd/m², and the CIE chromatically coordinate being x-coordinate=0.32 and y-coordinate=0.42 (at 100 Vrms, 400 Hz) is produced. As clearly seen from the above experiment result, an EL element emitting approximately pure white light can be produced.

Furthermore, preferable example of the thickness of each layer is as follows: the transparent protecting film 15 having the thickness of 150-200 µm; the transparent conductive layer 13 having the thickness of 0.3 µm; the binding material layer 11 having the thickness of 0.2 µm; the dielectric cells 9 having the thickness of 30-40 µm itself, having the thickness of 50-70 µm in conjunction with the sealing polymer layer 3; and the back electrode 1 having the thickness of 30 µm.

Thus, according to the embodiment described above, by forming a luminous layer which contains Zinc, Sulfur, Manganese, Copper, Silicon, and Titanium as the fluorescent particles 7, in which the mass ratio of Zinc is 1, that of Sulfur 3.1, that of Manganese 0.3, that of Copper 0.7, that of Silicon 3.5, and that of Titanium 5.6, and the sum of these numeric values is 14.2, an EL element emitting pure white light can be produced. By using this pure white EL element, various display devices of low power consumption can be produced.

In addition, the EL element of this embodiment has another following feature. A conventional white EL element shows reddish or pinkish white when an electric voltage is not applied thereto. In contrast, the color of the EL element of this embodiment, when an electric voltage is not applied thereto, looking from the side of the transparent protecting film 15, stays the same (i.e. white) as the color of light emitted from it. Therefore, in the case that the EL element of this embodiment is used in a signpost for example, when an electric voltage is not applied thereto in order to save energy during daylight, the color of the EL element in appearance stays the same as that when an electric voltage is applied thereto, so that the function as a signpost is not harmed.

Further, each of the dielectric cells 9 is embedded in a binding material 5 separately from each other, so that the oxidation of the fluorescent particles 7 in the dielectric cells 9 is prevented. Furthermore, when cutting, stamping, punching and other processes are worked upon the EL element, only a small number of the dielectric cells 9 located in the worked section are damaged by moisture, and most of the dielectric cells 9 are left undamaged. As a result, provided is an EL element emitting white light with excellent workability, high-luminance and long life without loss of life.

Meantime, when the mass ratio of Zinc is 1, the mass ratio of Manganese should be set at the value between 0.1 and 0.9, and that of Copper should be set at the value between 0.9 and 0.1, noting that the sum of those numeric values mentioned above is not more than 14.2.

Here, the greater the mass ratio of Manganese is, the more bluish the color of white light emitted from the EL element becomes. And the greater the mass ratio of Copper is, the more reddish the color of white light emitted from the EL element becomes.

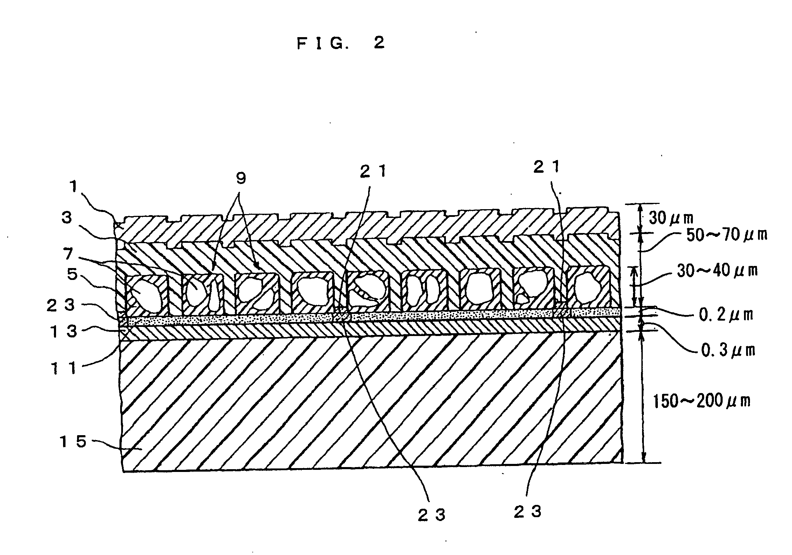

As a variant of the above-described embodiment, in order to simplify the electrical connection to the transparent conductive layer 13, as shown in Fig. 2, it is an alternative arrangement to employ a thin metallic contact grid 21 inserted between the sealing polymer layer 3, filling the interstices between groups of the dielectric cells 9, and a conductive epoxy binding material 23, which is locally disposed, may be used as a connection between the grid 21 and the transparent conductive layer 13.

It is to be understood that the present invention is not limited to the foregoing embodiments, but may be modified in various manners in addition to the embodiments described above, to the extent not deviating from the object of the invention.

For example, the construction materials of each layer, such as the transparent conductive layer 13 and the back electrode 1, are not limited to those described in the above embodiment, and other known materials can also be used as the construction materials thereof. Specifically, it is also possible to use silver (Ag) or conductive polymer as the material of the back electrode 1, other than above-mentioned aluminum.

### Industrial Applicability

As described above, the EL element of the present invention comprises a luminous layer which contains Zinc, Sulfur, Manganese, Copper, Silicon, and Titanium as the fluorescent particles, in which the mass ratio of Zinc is 1, that of Sulfur 3.1, that of Manganese 0.1-0.9, that of Copper 0.9-0.1, that of Silicon 3.5, and that of Titanium 5.6, and the sum of these numeric values is 14.2. Therefore, an EL element emitting approximately pure white light can be produced.

In addition, in contrast with a conventional white EL element which shows reddish or pinkish white when an electric voltage is not applied thereto, the color of the EL element of the present invention, when an electric voltage is not applied thereto, looking from the side of the transparent conductive layer, stays the same as the light emitted from the EL element. Therefore, in the case that the EL element of the present invention is used in a signpost for example, when an electric voltage is not applied thereto in order to save energy during daylight, the color of the EL element in appearance stays pure white, the same as that when an electric voltage is applied thereto, so that the function as a signpost is not harmed and the signpost works effectively day and night.

## Claims

1. An electroluminescent element laminated with a transparent conductive layer, a luminous layer including a plurality of fluorescent particles, an insulating layer, and a back electrode, wherein
said plurality of fluorescent particles comprise Zinc, Sulfur, Manganese, Copper, Silicon, and Titanium, in which the mass ratio of Zinc is 1, that of Sulfur 3.1, that of Manganese 0.1-0.9, that of Copper 0.9-0.1, that of Silicon 3.5, and that of Titanium 5.6, and the sum of these numeric values is 14.2.

2. The electroluminescent element according to claim 1, wherein said luminous layer comprises a plurality of dielectric cells which are arranged between said transparent conductive layer and said back electrode, and which fully encapsulate at least one of said plurality of fluorescent particles.

3. The electroluminescent element according to claim 2, wherein each of said plurality of dielectric cells is substantially separated from adjacent cells.
